# EUROPEAN PATENT SPECIFICATION

(11) **EP 4 409 237 B1**
(45) Date of publication and mention of the grant of the patent: **18.11.2026**
(21) Application number: 22846330.3
(22) Date of filing: 11.04.2022
(51) Int. Cl.: B60W 30/182, B60W 60/00, B60W 40/02, B60W 40/10, B60W 20/12, G01C 21/34, B60W 30/188, B60W 50/00, B60K 35/23

(54) **METHOD FOR GENERATING AN ADJUSTMENT ENERGY-EFFICIENT TRACK**
VERFAHREN ZUR ERZEUGUNG EINER EINSTELLUNGSENERGIEEFFIZIENTEN SPUR
PROCÉDÉ DE GÉNÉRATION D'UNE VOIE DE RÉGLAGE À FAIBLE CONSOMMATION D'ÉNERGIE

(30) Priority: 03.10.2021 RU 2021128773; 03.10.2021 RU 2021128774; 03.10.2021 RU 2021128775; 03.10.2021 RU 2021128776
(43) Date of publication of application: 07.08.2024
(73) Proprietor: Pankov, Boris Valerevich, 03540 Alicante (ES)
(72) Inventor: Pankov, Boris Valerevich, 03540 Alicante (ES)
(74) Representative: Pribic, Jelena
(86) International application number: PCT/RU2022/050126
(87) International publication number: WO 2023/003494

(56) References cited:
- EP-A1- 3 453 583
- WO-A1-2010/074668
- WO-A1-2021/045651
- CN-A- 105 303 861
- GB-A- 2 567 008
- JP-A- 2001 124 575
- RU-C1- 2 741 818
- US-A1- 2012 271 542
- US-A1- 2019 283 600
- US-A1- 2020 027 355
- US-A1- 2021 061 278
- US-B1- 10 061 637

## Description

### FIELD OF INVENTION

The proposed invention relates to methods for controlling energy consumption by a motor vehicle, and can be used in transportation industry.

### BACKGROUND OF THE INVENTION

There is a known method for evaluating the fuel efficiency of a motor vehicle disclosed in patent KR101526431B1, published on 06.05.2015 on 12 sheets (D1). The method of D1 is implemented by a device for evaluating the fuel efficiency of a motor vehicle, the device comprising: a data collection unit that collects data on driving, as well status and identification data of a plurality of motor vehicles, including the first motor vehicle; a driving index calculator that calculates driving indexes of each motor vehicle based on their driving data; a means for extracting an analogous group that extracts a group of motor vehicles, which are similar to the first motor vehicle, from a plurality of motor vehicles, based on their driving indexes and status data; a means for fuel efficiency evaluation that evaluates the fuel efficiency of the first motor vehicle based on its driving data and identification data in the analogous group; and a means for controlling a motor vehicle that controls the method of steering the motor vehicle or the method for improving the driving of the first motor vehicle, based on the fuel efficiency evaluation. According to the invention, the fuel efficiency of a motor vehicle can be evaluated with precision taking into account driver's habits and the current condition of the vehicle. In addition, the method of steering the motor vehicle and the driving mode based on the assessment of the vehicle's fuel are provided to the driver, so that he/she can improve his/her driving efficiency and the efficiency of steering the motor vehicle, as well as reduce the cost of vehicle maintenance.

The method disclosed in D1 does not use the information on the specific portion of the route that was covered by the first motor vehicle, which reduces the accuracy of fuel consumption estimation. In addition, the method disclosed in D1 uses the information obtained from motor vehicles with similar specifications and similar driving mode only, which prevents the method from being used in a global fuel consumption control system comprising multiple motor vehicles with different specifications. In addition, the method disclosed in D1 is used to identify operational problems of motor vehicles that affect the fuel consumption levels and require certain vehicle parts to be repaired or replaced, and so this method cannot be used to change the motor vehicle driving mode in order to reduce the energy consumption on a given portion of the route. In addition, the solution disclosed in D1 does not propose any specific or special means or methods to generate a safe and energy-efficient model of the motor vehicle moving along a portion of the route together with other vehicles. EP3453583A1 describes a method for generating an adjustment energy efficient track for a vehicle in operation.

### BRIEF SUMMARY OF THE INVENTION

The technical problem to be solved by the claimed invention is to provide a method, a device, a system, a motor vehicle, and a computer-readable medium that do not possess the drawbacks of the prior art and thus make it possible to generate an accurate and safe energy-efficient track for a motor vehicle that allows to reduce energy consumption by the motor vehicle moving along a portion of the route together with other vehicles.

The objective of the claimed invention is to overcome the drawbacks of the prior art and thus to reduce energy consumption by the motor vehicle moving along a portion of the route together with other vehicles, as well as improve safety of vehicles moving together.

The objective of the present invention is achieved by a method for generating an adjustment energy-efficient track for the vehicle in operation, that is performed by the computer's CPU, the method comprising at least the following steps: generating the first energy-efficient track for the vehicle in operation, the track comprising a speed profile of the vehicle in operation and its trajectory on the portion of the route; detecting a second motor vehicle located on the same portion of the route, wherein the second motor vehicle is detected using environmental sensors of the vehicle in operation, and generating a track for the second motor vehicle, based at least on its estimated speed profile and estimated trajectory on the portion of the route; and generating an adjustment energy-efficient track for the vehicle in operation, based on an adjusted speed profile, adjusted energy-efficiency evaluation, and adjusted trajectory of the vehicle in operation, as well as the estimated speed profile and estimated trajectory of the second motor vehicle on the portion of the route.

### BRIEF DESCRIPTION OF THE DRAWINGS

Exemplary embodiments of the present invention are described in further detail below with references made to the attached drawings, included herein by reference:
Fig. 1 illustrates an exemplary, non-limiting, diagram for the method 100 for generating an energy-efficient track for the motor vehicle.
Fig. 2 illustrates an exemplary, non-limiting, diagram for the step 101 of generating an estimated track for the first motor vehicle.
Fig. 3 illustrates an exemplary, non-limiting, diagram for the step 102 of adjusting the estimated track for the first motor vehicle.
Fig. 4 illustrates an exemplary, non-limiting, diagram for the step 103 of evaluating the passing of a portion of the route by the first motor vehicle.
Fig. 5 illustrates an exemplary, non-limiting, diagram for the step 104 of generating an estimated track for the second motor vehicle.
Fig. 6 illustrates an exemplary, non-limiting, diagram for the step 105 of adjusting the estimated track for the second motor vehicle.
Fig. 7 illustrates an exemplary, non-limiting, diagram for the step 106 of evaluating the passing of a portion of the route by the second motor vehicle.
Fig. 8 illustrates an exemplary, non-limiting, diagram for the method 200 for generating an adjustment energy-efficient track for the vehicle in operation.
Fig. 9 illustrates an exemplary, non-limiting, diagram for the system 300 for generating an energy-efficient track for the motor vehicle.

### DETAILED DESCRIPTION OF THE INVENTION

Alternative embodiments of the present invention are provided below. This disclosure is in no way limiting to the scope of protection granted by the present patent. Rather, it should be noted that the claimed invention can be implemented in different ways, so as to include different components and conditions, or combinations thereof, which are similar to the components and conditions disclosed herein, in combination with other existing and future technologies.

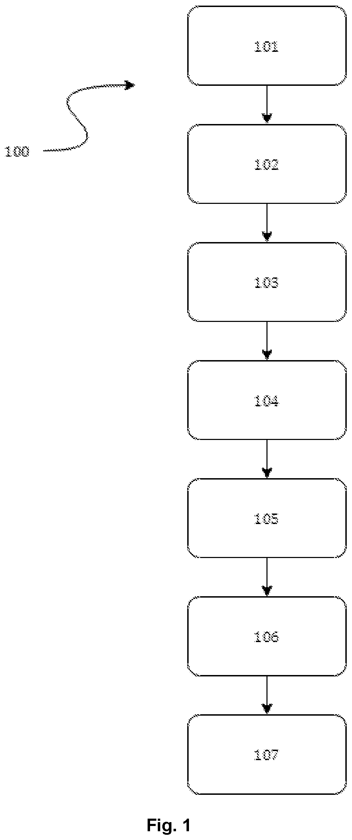

Fig. 1 illustrates an exemplary, non-limiting, diagram for the method 100 for generating an energy-efficient track for the motor vehicle. Preferably, but not limited to, the method 100 comprises the following steps: an optional step 101 of forming an estimated track for the first motor vehicle; an optional step 102 of adjusting the estimated track for the first motor vehicle; a step 103 of evaluating the passing of a portion of the route by the first motor vehicle; a step 104 of forming an estimated track for the vehicle in operation; an optional step 105 of adjusting the estimated track for the vehicle in operation; an optional step 106 of evaluating the passing of a portion of the route by the vehicle in operation; an optional step 107 of generating a track database. Preferably, but not limited to, the motor vehicle is any conventional motor vehicle, such as, but not limited to, a wheeled vehicle or a tracked vehicle, wherein the vehicle has to comprise at least one engine that consumes energy to actuate at least one moving device of the vehicle, such as, but not limited to, the wheels. The energy consumed by the engine is, for example, but not limited to, the energy produced by burning a fuel (in case the motor vehicle is equipped with an internal combustion engine), by electricity (in case the motor vehicle is equipped with an electric motor), or by a combination thereof (in case the motor vehicle is a hybrid vehicle). The first motor vehicle is a motor vehicle that passes the portion of the route first. The second motor vehicle is a motor vehicle that passes the portion of the route after the first motor vehicle. The vehicle in operation is a motor vehicle that passes portion of the route later than the second motor vehicle and, respectively, later than the first motor vehicle. While some of the methods disclosed below are intended to be implemented as part of the motion control system of the vehicle in operation, or in connection thereto, it should be obvious to a person having ordinary skill in the art that the disclosed methods may also be implemented as part of systems or devices that are not connected to the vehicle in operation or are indirectly connected to it, as well as in computer simulations. Preferably, but not limited to, the motor vehicles are controlled via a corresponding motor vehicle control system that comprises a set of interconnected units and components configured so that the motor vehicle can be controlled by an operator, i.e. a driver, an autonomous control system, a remote user, or a remote control system, in order to drive the motor vehicle, to stop its movement, to change the direction of its movement, to change its speed, etc. Motor vehicle control systems are widely known, and therefore are not described any further, however, preferably, but not limited to, the claimed motor vehicle control system has to comprise a speed control element of the motor vehicle, the component being one of the following or any suitable combination thereof: an accelerator pedal of the vehicle in operation, a brake pedal of the vehicle in operation, a retarder of the vehicle in operation, an intarder of the vehicle in operation, a compression brake of the vehicle in operation, a decompression brake of the vehicle in operation, or a gearbox of the vehicle in operation. Preferably, but not limited to, these elements, as well as other components of the motion control system should be equipped with a variety of sensors (such as, but not limited to, contact and contactless position sensors, encoders, induction sensors, magnetoresistive sensors, volumetric flow meters, capacitive sensors, oxygen sensors, nitrogen oxide sensors, temperature sensors, pressure sensors, knock sensors, oil level sensors, light level sensors, rain sensors, as well as various environmental sensors, such as, but not limited to, radars, lidars, cameras, global positioning sensors, odometry sensors, gyrostabilizers) allowing to read the state of each component at any given moment in time, to locate the motor vehicle at any given moment in time, and to read its technical status and other parameters at any given moment in time. Preferably, but not limited to, the sensors have to be adapted to digital data output. These sensors, as well as the methods for obtaining useful information from them, are widely known in the art, and therefore are not described in further detail. Preferably, but not limited to, the motor vehicle control system further comprises any kind of electronic devices capable of computation, such as a vehicle dashboard; a device for projecting visual information onto the windshield of the motor vehicle; a device for projecting visual information onto a head-up display (HUD); a head unit; a user device, also a wearable user device, for receiving and transmitting data (e.g. a transceiver), and for producing a GUI (e.g. a dashboard display); a display of the device for projecting visual information onto the windshield of the motor vehicle; a HUD of the device for projecting visual information onto a head-up display (HUD); a display of the head unit; a display of the user device, also a HUD of the wearable user device; a device for producing audio signals (e.g. speakers). Preferably, but not limited to, the electronic devices capable of computation comprise at least a CPU and a memory that stores the program code that, when implemented, induces the CPU to perform the steps according to some method performed by the CPU. For example, but not limited to, the CPU and memory may be the main CPU and memory of the motor vehicle control system implemented as a central controller. Preferably, but not limited to, the vehicle dashboard comprises the aforementioned CPU and memory, and/or communicates with the aforementioned central controller. Preferably, but not limited to, the device for projecting visual information onto the windshield of the motor vehicle comprises the aforementioned CPU and memory, and/or communicates with the aforementioned central controller. Preferably, but not limited to, the device for projecting visual information onto a HUD comprises the aforementioned CPU and memory, and/or communicates with the aforementioned central controller. Preferably, but not limited to, the head unit of the motor vehicle comprises the aforementioned CPU and memory, and/or communicates with the aforementioned central controller. Preferably, but not limited to, the user device communicates with the motor vehicle control system via conventional data exchange protocols and comprises the aforementioned CPU and memory, and/or communicates with the aforementioned central controller via conventional data exchange protocols. For example, but not limited to, the user device may be represented by a smartphone, a PDA, a tablet, a netbook, a laptop, etc. For example, but not limited to, the user device may be represented by a wearable user device, such as, for instance, a wearable display device as disclosed by the patent US10176783B2 or a similar one. When the user device is a wearable user device, it should be preferably, but not limited to, equipped by a HUD capable of displaying visual information. Preferably, but not limited to, the aforementioned dashboard, head unit, and the device for projecting visual information onto the windshield of the motor vehicle should comprise a corresponding display capable of visual information output, or be somehow connected to such display. Preferably, but not limited to, the aforementioned device for projecting visual information onto a HUD should comprise a corresponding HUD capable of visual information output, or be somehow connected to such display. Preferably, but not limited to, the computer devices mentioned in the present disclosure are generally any suitable computer devices that comprise at least a CPU and a memory, particularly, but not limited to, the claimed electronic devices capable of computation, the user device and the server of the system for generating an energy-efficient track for the vehicle in operation. Preferably, but not limited to, the control system of the motor vehicle may be connected via a transceiver with the user device, the server of the system for generating the energy-efficient track, other servers and control systems of other motor vehicles, but not limited to. Preferably, but not limited to, the generated estimated and/or energy-efficient tracks for each motor vehicle can be used to generate a control signal to control the movement of the corresponding motor vehicle, and/or used to generate an information signal to inform a human operator that it is necessary to change the movement of the corresponding motor vehicle.

Preferably, but not limited to, the portion of the route is a portion of the route with special properties. A route is, but not limited to, a strip of land adapted to be passable by motor vehicles, wherein the route may comprise, but not limited to, a road, a junction, an intersection, etc. A road may be, but not limited to, a paved road or a dirt road. Preferably, but not limited to, the special properties of the portion of the route may comprise at least one of the following: the geometry of the portion of the route, the road grade of the portion of the route, the allowed speed on the portion of the route, the quality of road surface of the portion of the route, speed limits on the portion of the route, turns on the portion of the route, weather conditions on the portion of the route at the moment it is passed by a motor vehicle, the infrastructure of the portion of the road, or a combination thereof. For example, but not limited to, the special properties of the portion of the route may be marked by acceleration points and/or deceleration points. In addition, but not limited to, a deceleration point may be a point on the portion of the route, in which the momentum of the motor vehicle is sufficient to cover the distance to an acceleration point on the portion of the route. In addition, but not limited to, a deceleration point may be a point on the portion of the route, in which the motor vehicle has to be given negative or zero acceleration in order to smoothly reach the acceleration point, wherein the negative acceleration may be such that the motor vehicle has zero momentum at the acceleration point. In addition, but not limited to, an acceleration point may be a point on the portion of the route, in which the motor vehicle continues to move with negative acceleration. In addition, but not limited to, an acceleration point may be a point on the portion of the route, in which the motor vehicle has zero momentum. For example, but not limited to, a portion of the route may comprise a road with a slope and an upslope that follows it, wherein the beginning of the slope may be marked by a deceleration point, and an acceleration point may be placed within the upslope.

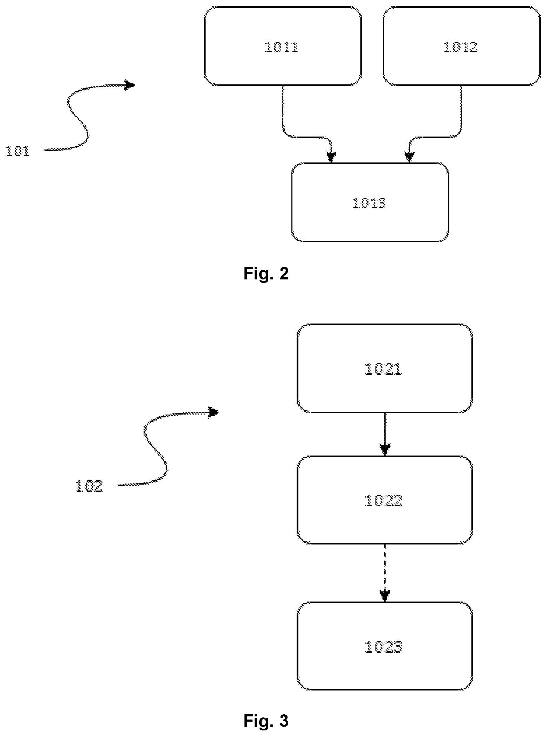

As shown in Fig. 2, the optional step 101 of generating an estimated track for the first motor vehicle, for example, but not limited to, comprises the following steps: a step 1011 of identifying the first motor vehicle; a step 1012 of identifying the portion of the route; and a step 1013 of generating an estimated track for the first motor vehicle. For example, but not limited to, the step 1011 involves determining the first motor vehicle and the data associated with it. Such data may include, for example, but not limited to, at least one of the following: the type and model of the first motor vehicle, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof. In general, it should be noted that such data may be used to generate an estimated speed profile of the first motor vehicle on a given portion of the route. The step 1011 further involves determining the location of the first motor vehicle relative to the portion of the route that is identified in the step 1012. In addition, for example, but not limited to, the step 1012 involves determining the first portion of the route along the direction of movement of the first motor vehicle, relative to its location. The step 1012 further involves determining the special properties of the portion of the route, which are data associated with the portion of the route to be passed by the first motor vehicle. In general, it should be noted that the data about the special properties of the portion of the route may be used to generate an estimated speed profile of the first motor vehicle on this portion of the route. In addition, for example, but not limited to, the step 1013 involves generating an estimated track for the first motor vehicle on the portion of the route using the data associated with the first motor vehicle and the data associated with the portion of the route to be passed by the first motor vehicle. Therefore, the generated estimated track for the first motor vehicle contains both the data associated with the first motor vehicle and the data associated with the portion of the route to be passed by the first motor vehicle. Preferably, but not limited to, the generated estimated track for the first motor vehicle further contains the estimated speed profile of the first motor vehicle, which, in turn, contains at least estimated locations of the first motor vehicle on the portion of the route and estimated speeds of the first motor vehicle on the portion of the route associated with said estimated locations. The estimated speed profile of the first motor vehicle further contains, but not limited to, estimated states of the speed control element of the first motor vehicle, which is one of the following: the accelerator pedal of the first motor vehicle, its brake pedal, its retarder, its intarder, its compression brake, decompression brake, its gearbox, or a combination thereof; wherein the state of the speed control element, according to the present disclosure, comprises the positions of the moving parts of the corresponding control element in its active state, i.e. relative to the state, in which the corresponding element is not activated, and/or any other active state of the element, and/or any other non-active state of the element; and wherein the estimated states of the control element are also associated with the corresponding estimated location of the motor vehicle on the portion of the route. Subsequently, the first motor vehicle moves along the given portion of the route in accordance with the estimated track for the first motor vehicle, wherein it is assumed that the estimated track is energy efficient. A motor vehicle track can be considered energy efficient in case both the time spent by the motor vehicle to pass the portion of the route and the energy consumed by the motor vehicle to pass the portion of the route are minimal. However, it should be obvious to a person having ordinary skill in the art that the estimated track for the first motor vehicle, generated in step 101, may be also generated using alternative ways.

As shown in Fig. 3, the optional step 102 of adjusting the estimated track for the first motor vehicle, for example, but not limited to, comprises the following steps: a step 1021 of determining the actual speed profile of the first motor vehicle in at least one of the moments when it passes the portion of the route; a step 1022 of comparing the actual speed profile with the corresponding estimated speed profile from the estimated track for the first motor vehicle; and, if necessary, a step 1023 of adjusting the actual speed profile in response to the results of said comparison. For example, but not limited to, the step 1021 involves determining the location of the first motor vehicle on the portion of the route, together with at least a single wheel speed of the first motor vehicle in the specified moment in time. In addition, for example, but not limited to, the step 1022 involves determining the estimated wheel speed of at least a single wheel of the first motor vehicle in the specified moment in time, as well as matching the actual wheel speed and the estimated wheel speed. In addition, for example, but not limited to, in case the actual wheel speed differs from the estimated wheel speed, an energy consumption control signal is generated for the first motor vehicle in step 1023. This energy consumption control signal, for example, but not limited to, contains a control signal for the motion control system of the first motor vehicle, which changes the operation of the engine, and/or the brake system, and/or other technical components of the first motor vehicle, so that the actual wheel speed matches the estimated wheel speed in the specified moment in time. However, it should be obvious to a person having ordinary skill in the art that although the adjustment of the estimated track for the first motor vehicle enhances the accuracy of the subsequent generation of the energy-efficient track for the vehicle in operation thus allowing to reduce energy consumption by the vehicle in operation on a specific portion of the route, said adjustment is optional, since the actual track of the first motor vehicle, which is generated according to the method described below, may be sufficient for generating an accurate energy-efficient track for the vehicle in operation.

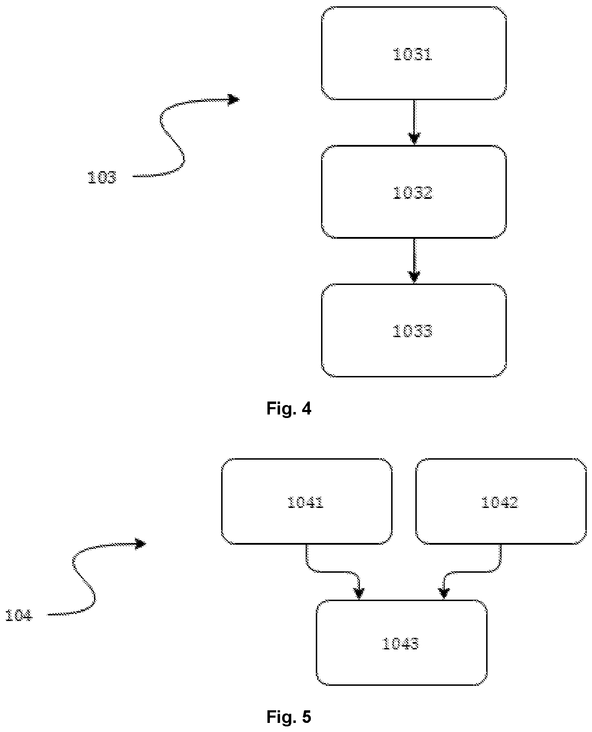

As shown in Fig. 4, the step 103 of evaluating the passing of a portion of the route by the first motor vehicle, which is also a step of collecting secondary data, comprises, but not limited to, the following steps: a step 1031 of collecting secondary data associated with the first motor vehicle and/or secondary data associated with the portion of the route passed by the first motor vehicle; a step 1032 of generating a track for the first motor vehicle; and a step 1033 of evaluating energy efficiency of the track of the first motor vehicle. For example, but not limited to, the step 1031 of collecting secondary data involves determining the fact of passing the portion of the route by the first motor vehicle, for example, but not limited to, based on the location of the first motor vehicle relative to the boundaries of the portion of the route, as well as (optionally) refining the data associated with the first motor vehicle and/or the portion of the route. In general, it should be noted that, in this step, the actual data associated with the first motor vehicle and/or the portion of the route it has passed are collected. In general, it should be noted that such data may be used to generate the actual track of the first motor vehicle, based on how it passed a given portion of the route. It should also be noted that refined data associated with the first motor vehicle and/or the portion of the route can be used to evaluate energy efficiency of the track generated for the first motor vehicle. In addition, for example, but not limited to, the step 1032 is the same as the step 1012, apart from the fact that the secondary data collected in step 1031 can be used to generate a track for the first motor vehicle along with the primary data associated with the first motor vehicle and/or the portion of the route. Thus, the actual track for the first motor vehicle generated in step 1032 also contains the actual data associated with the first motor vehicle, including, but not limited to, the actual speed profile of the first motor vehicle on the portion of the route and the actual data associated with the portion of the route. In addition, but not limited to, the actual speed profile of the first motor vehicle contains, but not limited to, actual locations of the first motor vehicle on the portion of the route and its actual speeds on the portion of the route that are associated with its actual locations on the portion of the route, as well as actual states of the speed control elements of the first motor vehicle, which are also associated with its actual locations on the portion of the route. In addition, for example, but not limited to, the step 1033 involves evaluating energy efficiency of the track generated for the first motor vehicle. In general, it should be noted that the track generated for the first motor vehicle will be considered energy efficient in case both the time spent by the first motor vehicle to pass the portion of the route and the energy consumed by the first motor vehicle to pass the portion of the route are minimal. Thus, it should be noted that, in step 1033, energy efficiency of the estimated track for the first motor vehicle is compared to that of the track generated for the first motor vehicle. It should also be noted that in case the track generated for the first motor vehicle is more energy-efficient than the estimated track for the first motor vehicle, then the estimated track for the vehicle in operation is generated using the generated (actual) track, even if it is different from the estimated track for the first motor vehicle. Otherwise, it should be noted that the estimated track for the vehicle in operation is also generated based on the actual track for the first motor vehicle, taking into account the secondary data associated with the first motor vehicle and/or the portion of the route passed by it. In addition, the estimated track for the first motor vehicle can also be adjusted based on how the first motor vehicle passed the given portion of the route, using the refined data associated with the first motor vehicle and/or the portion of the route. In this case, energy efficiency of the generated estimated track for the first motor vehicle is evaluated relative to the adjusted estimated track for the first motor vehicle. In general, it should be noted that the estimated track to be generated for the vehicle in operation has to be energy efficient, and it has to be generated taking into account the properties of the actual track of the first motor vehicle. However, it should be obvious to a person having ordinary skill in the art that the estimated track for the first motor vehicle, as was mentioned above, can be any estimated track for the first motor vehicle that contains the data associated with the first motor vehicle and the data associated with the portion of the route to be passed by the first motor vehicle, including, but not limited to, the estimated track for the first motor vehicle that was adjusted in step 102.

As will be demonstrated below, the steps of generating estimated and/or energy-efficient tracks for the second motor vehicle, as well as for any of the following motor vehicles to pass the portion of the route after the first motor vehicle, are essentially the same and may be interchangeable. For example, without limitation, generation of estimated and/or energy-efficient tracks for the vehicle in operation will be demonstrated, however, as was mentioned above, it should be obvious to a person having ordinary skill in the art that the aforementioned methods can be used to generate corresponding tracks for any motor vehicle that is to pass the given portion of the route after the first motor vehicle. As shown in Fig. 5, the step 104 of generating an estimated track for the vehicle in operation comprises the following steps: a step 1041 of identification the first motor vehicle; a step 1042 of identifying the portion of the route; and a step 1043 of generating an estimated track for the first motor vehicle. For example, but not limited to, the step 1041 is the same as the step 1011, apart from the fact that the collected data associated with the vehicle in operation are not the data associated with the first motor vehicle. In addition, for example, but not limited to, depending on the collected data associated with the vehicle in operation, an additional adjustment coefficient, or any other normalization methods may be used, in case the data associated with the vehicle in operation differ from any of the data associated with the first motor vehicle. In addition, for example, but not limited to, in the same step, the data of the portion of the route may also be refined, in case they can be refined without using the data from the track for the first motor vehicle, such as, but not limited to, weather data associated with the portion of the route, which will be relevant at the moment the vehicle in operation passes the given portion of the route, as well as infrastructure data of the portion of the route. In general, it should be noted that the first motor vehicle and the vehicle in operation are different, and therefore energy efficiency of their tracks on a given portion of the route should also be evaluated differently, preferably, but not limited to, in the way of adjusting their values relative to the normalized values. In addition, for example, but not limited to, the step 1042 is the same as the step 1012, apart from the fact that, when collecting the data associated with the portion of the route, the refined data associated with the portion of the route from the track generated for the first motor vehicle are also collected. In general, it should be noted that, in step 1042, the collected data associated with the portion of the route will be more accurate than the similar data from the estimated track for the first motor vehicle. In addition, for example, but not limited to, the step 1043 is the same as the step 1013, apart from the fact that the data from the track generated for the first motor vehicle are collected (and, optionally, normalized) along with the data associated with the first motor vehicle and/or the portion of the route, which are also collected and, optionally, normalized. In general, it should be noted that, in step 1043, there is generated an estimated track for the vehicle in operation that takes into account both the properties of the portion of the route or the characteristics of the vehicle in operation and how the first motor vehicle passed the portion of the route. Preferably, but not limited to, the generated estimated track for the vehicle in operation further contains the estimated speed profile of the vehicle in operation, which, in turn, contains at least estimated locations of the vehicle in operation on the portion of the route and estimated speeds of the vehicle in operation on the portion of the route associated with said estimated locations. The estimated speed profile of the vehicle in operation further contains, but not limited to, estimated states of the speed control element of the vehicle in operation, which is one of the following: the accelerator pedal of the first motor vehicle, its brake pedal, its retarder, its intarder, its compression brake, decompression brake, its gearbox, or a combination thereof; wherein the state of the speed control element, according to the present disclosure, comprises the positions of the moving parts of the corresponding control element in its active state, i.e. relative to the state, in which the corresponding element is not activated, and/or any other active state of the element, and/or any other non-active state of the element; and wherein the estimated states of the control element are also associated with the corresponding estimated location of the vehicle in operation on the portion of the route. In addition, but not limited to, as was shown above, the speed profile of the vehicle in operation may be normalized according to the data associated with the first motor vehicle. In addition, but not limited to, the speed profile of the vehicle in operation can be adjusted in advance based on the actual speed profile of the first motor vehicle, depending on the refined data associated with the portion of the route. More specifically, but not limited to, in step 1013, the properties of the portion of the route could not be considered with sufficient accuracy, since there were no actual data associated with the portion of the route, such as, but not limited to, the quality of pavement or temporary obstacles, and due to that fact the estimated track for the first motor vehicle could not possibly be energy efficient. In general, it should be noted that the estimated track for the first motor vehicle was generated using the data provided by the motor vehicle itself and external data sources only. However, but not limited to, based on how the first motor vehicle passed the given portion of the route, the track generated for the first motor vehicle can be significantly different from the estimated track for the first motor vehicle, for example, because the operator or the motion control system of the first motor vehicle were constantly assessing the situation on the portion of the route, which allowed the vehicle to pass it with higher energy efficiency than that of the estimated track, including by means of adjusting the estimated track. Thus, the estimated track generated for the vehicle in operation has by any means, not necessarily due to normalization, higher energy efficiency than the estimated track for the first motor vehicle. As will be shown below in the present disclosure, it is the estimated track generated for the vehicle in operation that becomes the pre-generated energy-efficient track for the vehicle in operation.

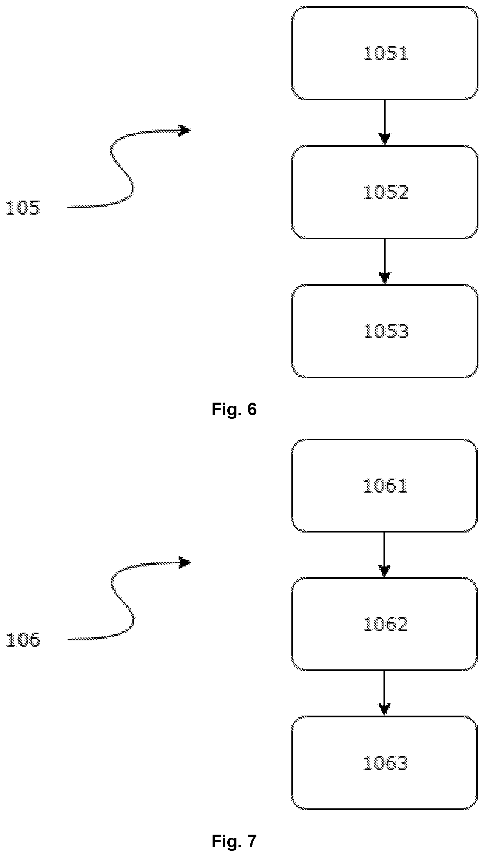

As shown in Fig. 6, the optional step 105 of adjusting the estimated track for the vehicle in operation, for example, but not limited to, comprises the following steps: a step 1051 of determining the actual speed profile of the vehicle in operation in at least one of the moments when it passes the portion of the route; a step 1052 of comparing the actual speed profile with the corresponding estimated speed profile from the estimated track for the vehicle in operation; and, if necessary, a step 1053 of adjusting the actual speed profile in response of the vehicle in operation to the results of said comparison. For example, but not limited to, the step 1051 involves determining the location of the vehicle in operation on the portion of the route, together with at least a single wheel speed of the second motor vehicle in the specified moment in time. In addition, for example, but not limited to, the step 1052 involves determining the estimated wheel speed of at least a single wheel of the vehicle in operation in the specified moment in time, as well as matching the actual wheel speed and the estimated wheel speed. In addition, for example, but not limited to, in case the actual wheel speed differs from the estimated wheel speed, an energy consumption control signal is generated for the second motor vehicle in step 1053. This energy consumption control signal, for example, but not limited to, contains a control signal for the motion control system of the second motor vehicle, which changes the operation of the engine, and/or the brake system, and/or other technical components of the second motor vehicle, so that the actual wheel speed matches the estimated wheel speed in the specified moment in time. However, it should be obvious to a person having ordinary skill in the art that although the adjustment of the estimated track for the vehicle in operation enhances the accuracy of the subsequent generation of the energy-efficient track for the following motor vehicles thus allowing to reduce energy consumption by the following motor vehicles on a specific portion of the route, said adjustment is optional, since the step 103 described above may be sufficient for generating accurate energy-efficient tracks for the following motor vehicles.

As shown in Fig. 7, the optional step 106 of evaluating the passing of a portion of the route by the vehicle in operation involves, for example, but not limited to, the following steps: a step 1061 of collecting secondary data associated with the vehicle in operation and/or secondary data associated with the portion of the route passed by the vehicle in operation; a step 1062 of generating an actual track for the vehicle in operation; and a step 1063 of evaluating energy efficiency of the track of the vehicle in operation. For example, but not limited to, the step 1061 of collecting secondary data involves determining the fact of passing the portion of the route by the vehicle in operation, for example, but not limited to, based on the location of the vehicle in operation relative to the boundaries of the portion of the route and/or relative to the location of the first motor vehicle at the moment of determining the fact of passing, as well as (optionally) refining the data associated with the vehicle in operation and/or the portion of the route. In general, it should be noted that, in this step, the actual data associated with the vehicle in operation and/or the portion of the route it has passed are collected. In general, it should be noted that such data may be used to generate the actual track of the vehicle in operation, based on how it passed a given portion of the route. It should also be noted that refined data associated with the vehicle in operation and/or the portion of the route can be used to evaluate energy efficiency of the actual track generated for the vehicle in operation. In addition, for example, but not limited to, the step 1062 is the same as the step 1032, apart from the fact that the secondary data collected in step 1061 can be used to generate the actual track for the vehicle in operation along with the primary data associated with the first motor vehicle and/or the portion of the route, and along with the secondary data collected in step 1032. Thus, the actual track for the vehicle in operation generated in step 1062 also contains the actual data associated with the vehicle in operation, including the actual speed profile of the vehicle in operation on the portion of the route and the actual data associated with the portion of the route, wherein these data may optionally be normalized relative to the data collected in step 1032. In addition, for example, but not limited to, the step 1063 involves evaluating energy efficiency of the track generated for the vehicle in operation. In general, it should be noted that the track generated for the vehicle in operation will be considered energy efficient in case both the time spent by the vehicle in operation to pass the portion of the route and the energy consumed by the vehicle in operation to pass the portion of the route are minimal. Thus, it should be noted that, in step 1063, energy efficiency of the estimated track for the vehicle in operation is compared to that of the actual track generated for the vehicle in operation. It should also be noted that in case the actual track for the vehicle in operation is more energy-efficient than the estimated track for the vehicle in operation, then the estimated track for any of the following motor vehicles is generated using the generated (actual) track for the vehicle in operation, even if it is different from the estimated track for the vehicle in operation, wherein the following motor vehicle is any motor vehicle that is to pass the given portion of the route after the vehicle in operation. Otherwise, it should be noted that the estimated track for the following motor vehicle is also generated based on the actual track for the vehicle in operation, taking into account the secondary data associated with the vehicle in operation and/or the portion of the route passed by it. In addition, the estimated track for the vehicle in operation can also be adjusted based on how the vehicle in operation passed the given portion of the route, using the refined data associated with the vehicle in operation and/or the portion of the route. In this case, energy efficiency of the generated estimated track for the vehicle in operation is evaluated relative to the adjusted estimated track for the vehicle in operation. In general, it should be noted that the estimated track to be generated for the following motor vehicle has to be energy efficient, and it has to be generated taking into account the properties of the actual track of the vehicle in operation. However, it should be obvious to a person having ordinary skill in the art that although the evaluation of how the vehicle in operation passes a given portion of the route enhances the accuracy of the subsequent generation of the energy-efficient tracks for the following motor vehicles thus allowing to reduce energy consumption by these motor vehicles on a specific portion of the route, said evaluation is optional, since the aforementioned estimated track for the vehicle in operation, or even the aforementioned estimated track for the vehicle in operation, may be sufficient for subsequent generation of a model energy-efficient track for any of the following motor vehicles.

The optional step 107 of generating a track database involves, for example, but not limited to, collecting a plurality of tracks of motor vehicles generated based on how these motor vehicles, i.e., at least the first motor vehicle and the vehicle in operation, passed the portion of the route. For example, but not limited to, in step 107, the plurality of tracks of motor vehicles that have passed the portion of the route are collected. In addition, for example, but not limited to, in step 107, the collected tracks are systematized, so that these data can be used to generate a plurality of estimated tracks for the following motor vehicles. In addition, but not limited to, the plurality of such tracks can be used as an input for analysis, including by machine learning tools, in order to generate the most energy-efficient (model) track that would be suitable for any motor vehicle. Such model track can be unique for each motor vehicle and can subsequently be used as the estimated track for the first motor vehicle, whereupon the steps according to the method for generating an energy-efficient track will be performed again in order to generate a different model track for the same motor vehicle. In addition, but not limited to, such data can be used to change the properties of the portion of the route so as to ensure the generation of the most energy-efficient model track. However, it should be obvious to a person having ordinary skill in the art that although the forming of the track database enhances the accuracy of the subsequent generation of the energy-efficient tracks for the following motor vehicles thus allowing to reduce energy consumption by these motor vehicles on a specific portion of the route, said evaluation is optional, since the aforementioned estimated track for the vehicle in operation, or even the aforementioned estimated track for the vehicle in operation, may be sufficient for subsequent generation of model energy-efficient tracks for the following motor vehicles.

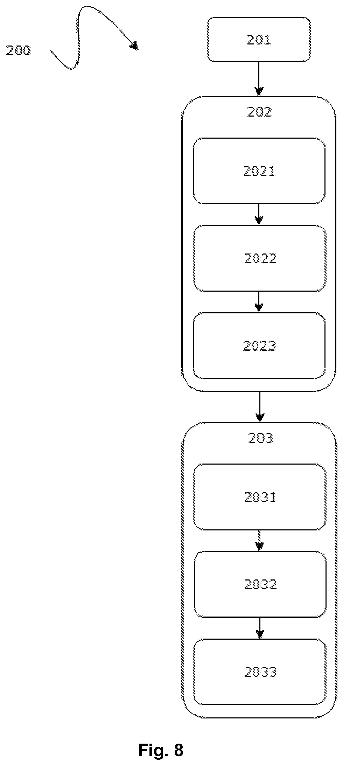

In addition, as shown in Fig. 8, when the vehicle in operation is moving along the portion of the route together with other motor vehicles, its movement should be not only energy efficient, but also safe. In order to achieve that, there is provided, for example, but not limited to, a method 200 for generating an adjustment energy-efficient track for the vehicle in operation, that is performed by the computer's CPU, the method 200 comprising at least the following steps: generating 201 the first energy-efficient track for the vehicle in operation, the track comprising a speed profile of the vehicle in operation and its trajectory on the portion of the route; detecting 202 a second motor vehicle located on the same portion of the route, wherein the second motor vehicle is detected using environmental sensors of the vehicle in operation, and generating a track for the second motor vehicle, based at least on its estimated speed profile and estimated trajectory on the portion of the route; and generating 203 an adjustment energy-efficient track for the vehicle in operation, based on an adjusted speed profile, adjusted energy-efficiency evaluation, and adjusted trajectory of the vehicle in operation, as well as the estimated speed profile and estimated trajectory of the second motor vehicle on the portion of the route. Preferably, but not limited to, in step 201, the first energy-efficient track for the vehicle in operation is generated, for example, using methods as shown above with reference to Figs. 1-7, but the first energy-efficient track for the vehicle in operation generated in step 201 further comprises generating a speed profile of the vehicle in operation on the portion of the route passed by the first motor vehicle, wherein the speed profile is based on the speed profile of the first motor vehicle and evaluation of its energy efficiency; and generating a trajectory of the vehicle in operation on the portion of the route passed by the first motor vehicle, wherein the trajectory is based on the speed profile of the first motor vehicle and evaluation of its energy efficiency. In addition, preferably, but not limited to, the speed profile of the vehicle in operation is generated taking into account the speed profile of the first motor vehicle on the portion of the route and its energy efficiency evaluation, wherein, preferably, but not limited to, the generated speed profile of the vehicle in operation and its trajectory on the portion of the route are such that the resulting energy efficiency of the vehicle in operation moving along the portion of the route is not worse than that of the first motor vehicle. In addition, for instance, but not limited to, the trajectory of the vehicle in operation on the portion of the route may be based on that of the first motor vehicle, for example, but not limited to, the trajectory of the vehicle in operation on a certain lane of the portion of the route may be selected. In addition, but not limited to, there may be other (second) motor vehicles on the same portion of the route, and their presence can be detected by the environmental sensors of the vehicle in operation using conventional methods, which will not be described herein. In order to detect the second motor vehicle on the portion of the route, there may be provided a step 202, in which, preferably, but not limited to, a track for the second motor vehicle is also generated by any computer device mentioned above performing at least the following steps: generating 2021 an estimated speed profile of the second motor vehicle, wherein the second motor vehicle and direction of its movement are detected by the environmental sensors of the vehicle in operation; determining 2022 a point on the portion of the route, where the vehicle in operation and the second motor vehicle may happen to be at the same time in case their respective speed profiles are not adjusted; and generating 2023 an estimated trajectory for the second motor vehicle on the portion of the route, based on the respective speed profiles of the vehicle in operation and the second motor vehicle, and the point on the portion of the route, where both vehicles may happen to be at the same time in case their respective speed profiles are not adjusted. In addition, but not limited to, based on the data provided by the environmental sensors of the vehicle in operation, the location of the second motor vehicle on the portion of the route, its direction, and speed can be calculated. In addition, but not limited to, these parameters of the second motor vehicle are determined in relation to both the portion of the route and the vehicle in operation. Preferably, but not limited to, in case initial trajectories of the vehicle in operation and the second motor vehicle on the same portion of the route coincide, a point on the portion of the route is determined in step 2022, where both the vehicle in operation and the second motor vehicle may happen to be at the same time if their respective speed profiles remain unadjusted, based on the data from the first energy-efficient track for the vehicle in operation and the data obtained in step 2021. Preferably, but not limited to, in step 2023, an estimated trajectory of the second motor vehicle may be determined, for example, but not limited to, by means of the environmental sensors of the vehicle in operation, including, but not limited to, the situation, when the respective speed profiles of the vehicle in operation and the second motor vehicle remain unadjusted. In case it has been determined that if the respective speed profiles and/or trajectories of the vehicle in operation and the second motor vehicle remain unadjusted and both vehicles will be in the same point on the portion of the route at the same time, such movement is considered to be unsafe and impermissible, and therefore, it is necessary to perform the step 203 of generating an adjustment energy-efficient track for the vehicle in operation. Preferably, but not limited to, the step 203, implemented by any computer device described above, comprises the following steps: generating 2031 an estimated speed profile of the second motor vehicle and its estimated trajectory on the portion of the route; determining 2032 a point on the portion of the route, where the vehicle in operation and the second motor vehicle may happen to be at the same time in case their respective speed profiles are not adjusted; and generating 2033 an adjusted speed profile of the vehicle in operation and its adjusted trajectory on the portion of the route, wherein the adjusted trajectory does not include the aforementioned point on the portion of the route, and wherein the adjusted speed profile of the vehicle in operation is generated based on the adjusted evaluation of energy-efficiency of the vehicle in operation. Preferably, but not limited to, in step 2031, the estimated speed profile and the estimated trajectory of the second motor vehicle, that have been generated in step 202, are obtained, and after that, in step 2032, the point on the portion of the route is determined, where both the vehicle in operation and the second motor vehicle will be together at the same time in case their respective speed profiles and/or trajectories on the portion of the route remain unadjusted. In addition, preferably, but not limited to, in step 2033, an adjusted speed profile and an adjusted trajectory for the vehicle in operation are generated. In addition, preferably, but not limited to, in case it is possible to maintain energy efficient movement of the vehicle in operation on the portion of the route when it changes its speed, i.e. if the adjusted energy efficiency evaluation for the vehicle in operation corresponds to the pre-set energy efficiency that corresponds to the first motor vehicle, an adjusted speed profile is generated for the vehicle in operation. In addition, but not limited to, the adjusted speed profile of the vehicle in operation is generated alongside a different trajectory for the vehicle in operation, which does not include the aforementioned point on the portion of the route, where both the vehicle in operation and the second motor vehicle might happen to be at the same time in case their respective speed profiles remained unadjusted. For example, but not limited to, if there are several motor vehicles moving along the same portion of the route, it may be determined that, if the vehicle in operation that follows its first energy-efficient track switches to a different lane, e.g. in order to overtake another motor vehicle, such switch may cause an accident, in case there is a second motor vehicle moving along said lane, and its speed profile includes the speed of the second motor vehicle that is higher than the speed of the vehicle in operation at any moment in time. Preferably, but not limited to, the method 200 may be used to generate an adjustment energy-efficient track for the vehicle in operation that would ensure that its movement is both energy efficient and safe, as in the exemplary situation described above, for example, but not limited to, the speed profile of the vehicle in operation may be adjusted, so that the vehicle in operation slows down and overtakes another motor vehicle only after it has been itself overtaken by the second motor vehicle, or, if possible, but not limited to, the speed profile of the vehicle in operation may be adjusted, so that the vehicle in operation overtakes another motor vehicle at a speed that is higher than that of the second motor vehicle, wherein in both these exemplary cases no trajectory of the vehicle in operation includes the aforementioned point on the portion of the route.

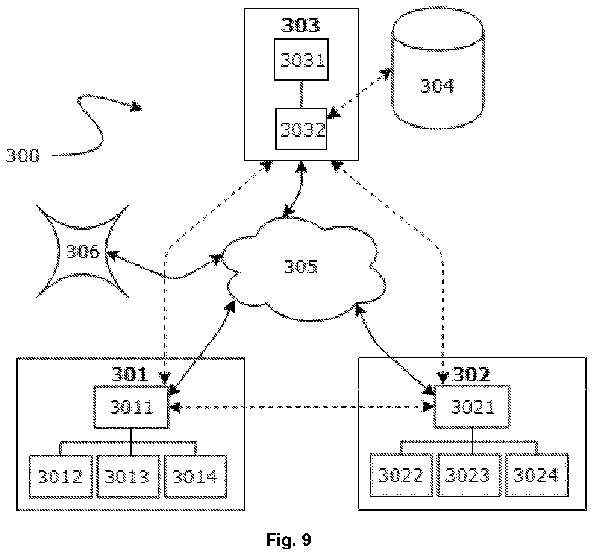

Fig. 9 illustrates an exemplary, non-limiting, diagram for the system 300 for generating an adjustment energy-efficient track for a vehicle in operation. For example, but not limited to, the claimed system 300 comprises the server 303 that communicates at least with the aforementioned transceivers 3011, 3021 of the first motor vehicle 301 and the vehicle in operation 302, respectively. In addition, but not limited to, the server 303 is a computer device comprising at least a CPU 3031 and a memory 3032. In addition, but not limited to, the memory (computer-readable medium) of the server 303 contains the program code that, when implemented, induces the CPU to perform the steps according to the method for generating an adjustment energy-efficient track for the motor vehicle that was described above with reference to Figs. 1-8. For example, but not limited to, the computer-readable medium (memory 3031) may comprise a non-volatile memory (NVRAM); a random-access memory (RAM); a read-only memory (ROM); an electrically erasable programmable read-only memory (EEPROM); a flash drive or other memory technologies; a CD-ROM, a digital versatile disk (DVD) or other optical/holographic media; magnetic tapes, magnetic film, a hard disk drive or any other magnetic drive; and any other medium capable of storing and encoding the necessary information. In addition, but not limited to, the memory 3032 comprises a computer-readable medium based on the computer memory, either volatile or non-volatile, or a combination thereof. In addition, but not limited to, exemplary hardware devices include solid-state drives, hard disk drives, optical disk drives, etc. In addition, but not limited to, the computer-readable medium (memory 3032) is not a temporary memory (i.e., a permanent, non-transitive memory), and therefore it does not contain a temporary (transitive) signal. In addition, but not limited to, the memory 3032 may store an exemplary environment, wherein the procedure of generating an energy-efficient track for the motor vehicle may be implemented using computer-readable commands or codes that are stored in the memory of the server. In addition, but not limited to, the server 303 comprises one or more CPUs 3031 which are designed to execute computer-readable commands or codes that are stored in the memory 3032 of the device in order to implement the procedure of generating an adjustment energy-efficient track for the motor vehicle. In addition, but not limited to, the system 300 may further comprise a database 304. The database 304 may be, but not limited to, a hierarchical database, a network database, a relational database, an object database, an object-oriented database, an object-relational database, a spatial database, a combination of two or more said databases, etc. In addition, but not limited to, the database 304 stores the data to be analyzed in the memory 3032 or in the memory of a different computer device that communicates with the server 303, which may be, but not limited to, a memory that is similar to any of the memories 3032, as described above, and which can be accessed via the server 303. In addition, but not limited to, the database 304 stores the data comprising at least commands to perform the steps according to the methods 100 and 200 as described above; the processed data associated with the first motor vehicle and/or the vehicle in operation, and/or the portion of the route, including refined data; estimated and generated tracks for motor vehicles; navigational data; model tracks for motor vehicles; etc. In addition, but not limited to, the exemplary system 300 further comprises, respectively, at least the first vehicle 301 and the vehicle in operation 302. Such vehicles 301, 302 usually comprise corresponding transceivers 3011, 3021 adapted to sending the data to the server 303 that communicates with motion control systems 3012, 3022 of respective vehicles and/or with on-board information systems 3013, 3023 (if present) of respective vehicles. Optionally, but not limited to, such motor vehicles may comprise various sensors, including environmental sensors, 3014, 3024 to collect data that are associated with the corresponding motor vehicle in operation, and/or the portion of the route. In addition, but not limited to, the such sensors 3014, 3024 include a positioning sensor, speed sensors (such as, but not limited to, a crankshaft position sensor, a camshaft position sensor, a throttle position sensor, an accelerator pedal position sensor, a wheel speed sensor, a power consumption sensor, e.g. injection rate or current voltage characteristic), energy consumption sensors (such as, but not limited to, fuel level sensors, battery sensors, an accelerator pedal position sensor, injection rate sensor, and an RPM sensor), temperature sensors (such as, but not limited to, a coolant temperature sensor, an ambient temperature sensor, an in-car temperature sensor), pressure sensors (such as, but not limited to, an intake manifold pressure sensor, a fuel injection pressure sensor, a tyre pressure sensor), environmental sensors (such as, but not limited to, a light level sensor, a rain sensor, a radar, a lidar, a video camera, a sonar), and sensors and speed control elements of the motor vehicle, as well as other elements of the motion control system of the motor vehicle. In addition, but not limited to, there is provided a server 303, which, in addition to the functions mentioned above, stores and facilitates the execution of computer-readable commands and codes disclosed herein, which, accordingly, will not be described again. In addition, but not limited to, the server 303, in addition to the functions mentioned above, is capable of controlling the data exchange in the system 300. In addition, but not limited to, data exchange within the system 300 is performed with the help of one or more data exchange networks 305. In addition, but not limited to, data exchange networks 305 may include, but not limited to, one or more local area networks (LAN) and/or wide area networks (WAN), or may be represented by the Internet or Intranet, or a virtual private network (VPN), or a combination thereof, etc. In addition, but not limited to, the server 303 is further capable of providing a virtual computer environment for the components of the system to interact with each other. In addition, but not limited to, the network 305 provides interaction between transceivers 3011, 3021 on motor vehicles 301, 302, the server 303, and the database 304 (optionally). In addition, but not limited to, the server 303 and the database 304 may be connected directly using conventional wired or wireless communication means and methods, which, accordingly, are not described in further detail. In addition, but not limited to, the system 300 may optionally comprise infrastructure elements 306 of the portion of the route, specifically, various technical means capable of collecting the aforementioned data that are associated with motor vehicles and/or the portion of the route, and optionally can provide the aforementioned network 305 for data exchange on the portion of the route. For example, but not limited to, such elements 306 include a weather station, a speed monitoring camera, an infrastructural transceiver of the portion of the route, pavement weight sensors, etc., as well as the data from other motor vehicles that may or may not be involved with the system 300, the data transferred and propagated in data exchange environments based on data exchange technologies, such as vehicle-to-vehicle (V2V) and vehicle-to-everything (V2X). In addition, but not limited to, one of the aforementioned on-board information systems 3013, 3023, in case it is a computer device comprising a CPU and a memory that are similar to the aforementioned CPU 3031 and memory 3032, may be represented by the aforementioned server 303 with its basic functions, wherein the aforementioned transceivers 3011, 3012 may communicate with each other using any data exchange network or directly, via wireless communication, such as, but not limited to, radio communication, acoustic communication, infrared communication, laser communication, etc., wherein the aforementioned database 304 may be implemented directly within the memory of any of the on-board information systems 3013 and 3023 (if present).

The present disclosure of the claimed invention demonstrates only certain exemplary embodiments of the invention, which by no means limit the scope of the invention as defined by the claims, meaning that it may be embodied in alternative forms that do not go beyond the scope of the present disclosure and which may be obvious to persons having ordinary skill in the art.

## Claims

1. A method (100) for generating an adjustment energy-efficient track for a vehicle in operation, that is performed by a computer's CPU, the method comprising at least the following steps:
generating (201) a first energy-efficient track for the vehicle in operation, the track comprising a speed profile of the vehicle in operation and its trajectory on a portion of a route;
detecting (202) a second motor vehicle located on the same portion of the route, wherein the second motor vehicle is detected using environmental sensors of the vehicle in operation, and generating a track for the second motor vehicle, based at least on its estimated speed profile and estimated trajectory on the portion of the route;
and generating (203) an adjustment energy-efficient track for the vehicle in operation, adjusting the said first energy-efficient track, based on an adjusted speed profile, adjusted energy-efficiency evaluation, and adjusted trajectory of the vehicle in operation, as well as the estimated speed profile and estimated trajectory of the second motor vehicle on the portion of the route,
the environmental sensors of the vehicle in operation comprise any combination of a light level sensor, a radar, a lidar, a video camera and a sonar, and
the method further comprising the following steps
collecting primary data that involves
obtaining data associated with a first motor vehicle, data associated with a portion of the route to be passed by the first motor vehicle, and data associated with the vehicle in operation, wherein the vehicle in operation passes the portion of the route after the first motor vehicle;
obtaining data associated with the second motor vehicle, wherein the second motor vehicle passes the portion of the route after the first motor vehicle, but before the vehicle in operation;
collecting secondary data that involves
generating a track of the first motor vehicle, wherein said track is generated based on how the first motor vehicle passed the portion of the route;
wherein the first energy-efficient track for the vehicle in operation is generated based on the track generated for the first motor vehicle;
wherein the track for the first motor vehicle is generated by performing the following steps:
generating a speed profile of the first motor vehicle on the passed portion of the route;
evaluating energy efficiency of the first motor vehicle on the passed portion of the route,
generating an energy-efficient track for the second motor vehicle, wherein the energy-efficient track for the second motor vehicle is generated based on the track generated for the first motor vehicle.

2. The method of claim 1, **characterized in that** the data associated with the first motor vehicle include at least one of the following: the type and model of the first motor vehicle, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof; the data associated with the vehicle in operation include at least one of the following: the type and model of the vehicle in operation, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof; and the data associated with the portion of the route to be passed by the first motor vehicle include at least one of the data of the portion of the route to be passed by the first motor vehicle, obtained from external sources, and/or a combination thereof: the geometry of the portion of the route, the road grade of the portion of the route, the allowed speed on the portion of the route, the quality of road surface of the portion of the route, speed limits on the portion of the route, turns on the portion of the route, weather conditions on the portion of the route, or its infrastructure.

3. The method of claim 1, **characterized in that** the adjustment energy-efficient track for the vehicle in operation is generated by means of the CPU of the computer device implementing the method for generating an adjustment energy-efficient track for the motor vehicle, the method comprising the following steps:
generating an estimated speed profile of the second motor vehicle and its estimated trajectory on the portion of the route;
determining a point on the portion of the route, where the vehicle in operation and the second motor vehicle may happen to be at the same time in case their respective speed profiles are not adjusted;
and generating an adjusted speed profile of the vehicle in operation and its adjusted trajectory on the portion of the route, wherein the adjusted trajectory does not include the aforementioned point on the portion of the route, and wherein the adjusted speed profile of the vehicle in operation is generated based on the adjusted evaluation of energy-efficiency of the vehicle in operation.

4. A system for generating an adjustment energy-efficient track for a vehicle in operation, the device comprising at least:
a CPU;
more than one environmental sensor configured to detect a second motor vehicle, the environmental sensors comprising any combination of a light level sensor, a radar, a lidar, a video camera and a sonar;
and a memory that stores a program code that, when implemented by the CPU, induces the CPU to perform the steps according to the method for generating an adjustment energy-efficient track for the vehicle in operation, according to any of claims 1-3.

5. A system according to the previous claim wherein it further comprises a server, the server in turn at least comprises the CPU.

6. A motor vehicle comprising at least:
a driving device;
an engine that is connected to and actuates the driving device, and
a motor vehicle control system that is adapted to control the engine of the motor vehicle, and
the system of any of the claims 4-5.

7. A non-transitory computer-readable medium that stores a program code that, when implemented by a CPU of a computer device and upon detection of a second motor vehicle by more than one environmental sensor, induces the CPU to perform the steps according to the method for generating an adjustment energy-efficient track for a vehicle in operation, according to any of claims 1-3.

## Patentansprüche

1. Verfahren (100) zum Erzeugen eines angepassten energieeffizienten Fahrwegs für ein Fahrzeug in Betrieb, das von der CPU eines Computers ausgeführt wird, wobei das Verfahren mindestens die folgenden Schritte umfasst:
Erzeugen (201) eines ersten energieeffizienten Fahrwegs für das Fahrzeug in Betrieb, wobei der Fahrweg ein Geschwindigkeitsprofil des Fahrzeugs in Betrieb und seine Bewegungsbahn auf einem Streckenabschnitt umfasst;
Erfassen (202) eines zweiten Kraftfahrzeugs, das sich auf demselben Streckenabschnitt befindet, wobei das zweite Kraftfahrzeug mithilfe von Umgebungssensoren des Fahrzeugs in Betrieb erfasst wird, und Erzeugen eines Fahrwegs für das zweite Kraftfahrzeug, der zumindest auf dessen geschätztem Geschwindigkeitsprofil und dessen geschätzten Bewegungsbahn auf diesem Streckenabschnitt basiert; und
Erzeugen (203) eines angepassten energieeffizienten Fahrwegs für das Fahrzeug in Betrieb, Anpassen des ersten energieeffizienten Fahrwegs auf der Grundlage eines angepassten Geschwindigkeitsprofils, einer angepassten Energieeffizienzbewertung und einer angepassten Bewegungsbahn des Fahrzeugs in Betrieb sowie des geschätzten Geschwindigkeitsprofils und der geschätzten Bewegungsbahn des zweiten Kraftfahrzeugs auf diesem Streckenabschnitt,
wobei die Umgebungssensoren des Fahrzeugs in Betrieb eine beliebige Kombination aus einem Helligkeitssensor, einem Radar, einem LiDAR, einer Videokamera und einem Sonar umfassen, und
wobei das Verfahren ferner die folgenden Schritte umfasst
Erfassen von Primärdaten, was Folgendes einschließt
Erhalten von Daten zu einem ersten Kraftfahrzeug und Daten zu einem von dem ersten Kraftfahrzeug zu passierenden Streckenabschnitt, sowie Daten zum Fahrzeug in Betrieb, wobei das Fahrzeug in Betrieb den Streckenabschnitt nach dem ersten Kraftfahrzeug passiert;
Erhalten von Daten zu einem zweiten Kraftfahrzeug, wobei das zweite Kraftfahrzeug den Streckenabschnitt nach dem ersten Kraftfahrzeug, aber vor dem Fahrzeug in Betrieb passiert;
Erfassen von Sekundärdaten, was Folgendes einschließt
Erzeugen eines Fahrwegs des ersten Kraftfahrzeugs, wobei das Erzeugen des Fahrwegs auf Grundlage davon ausgeführt wird, wie das erste Kraftfahrzeug den Streckenabschnitt passiert hat;
wobei der erste energieeffiziente Fahrweg für das Fahrzeug in Betrieb auf der Grundlage des für das erste Kraftfahrzeug erzeugten Fahrwegs erzeugt wird; wobei der Fahrweg für das erste Kraftfahrzeug durch Ausführen der folgenden Schritte erzeugt wird:
Erzeugen eines Geschwindigkeitsprofils des ersten Kraftfahrzeugs auf dem passierten Streckenabschnitt;
Evaluieren einer Energieeffizienz des ersten Kraftfahrzeugs auf dem passierten Streckenabschnitt,
Erzeugen eines energieeffizienten Fahrwegs für das zweite Kraftfahrzeug, wobei der energieeffiziente Fahrweg für das zweite Kraftfahrzeug auf der Grundlage des für das erste Kraftfahrzeug erzeugten Fahrwegs erzeugt wird.

2. Verfahren nach Anspruch 1, **dadurch gekennzeichnet, dass** die Daten zum ersten Kraftfahrzeug mindestens eines der folgenden umfassen: die Art und den Typ des ersten Kraftfahrzeugs, dessen Masse, dessen aerodynamische Eigenschaften, dessen Radformel, dessen geschätzter und/oder tatsächlicher Energieverbrauch sowie Daten von dessen Beschleunigungssensoren und/oder Geschwindigkeitssensoren, Daten von dessen Positionssensoren, Gewichtssensoren und Radgeschwindigkeitssensoren und/oder eine Kombination davon; die Daten zum Fahrzeug in Betrieb umfassen mindestens eines der folgenden: die Art und den Typ des Fahrzeugs in Betrieb, dessen Masse, dessen aerodynamische Eigenschaften, dessen Radformel, dessen geschätzter und/oder tatsächlicher Energieverbrauch sowie Daten von dessen Beschleunigungssensoren und/oder Geschwindigkeitssensoren, Daten von dessen Positionssensoren, Gewichtssensoren und Radgeschwindigkeitssensoren und/oder eine Kombination davon; und die Daten zum durch das erste Kraftfahrzeug zu passierenden Streckenabschnitt umfassen mindestens welche von den Daten des durch das erste Kraftfahrzeug zu passierenden Streckenabschnitte, erhalten aus externen Quellen und/oder eine Kombination der folgenden: die Geometrie des Streckenabschnitts, die Straßensteigung des Streckenabschnitts, die zulässige Geschwindigkeit auf dem Streckenabschnitt, die Qualität der Straßenfahrbahn auf dem Streckenabschnitt, Geschwindigkeitsbegrenzungen auf dem Streckenabschnitt, Kurven auf dem Streckenabschnitt, die Wetterbedingungen auf dem Streckenabschnitt oder dessen Infrastruktur.

3. Verfahren nach Anspruch 1, **dadurch gekennzeichnet, dass** der angepasste energieeffiziente Fahrweg für das Fahrzeug in Betrieb mittels der CPU der Computervorrichtung, die das Verfahren zum Erzeugen eines angepassten energieeffizienten Fahrwegs für das Kraftfahrzeug umsetzt, erzeugt wird, wobei das Verfahren die folgenden Schritte umfasst:
Erzeugen eines geschätzten Geschwindigkeitsprofils des zweiten Kraftfahrzeugs und seiner geschätzten Bewegungsbahn auf dem Streckenabschnitt;
Bestimmen eines Punktes auf dem Streckenabschnitt, an dem sich das Fahrzeug in Betrieb und das zweite Kraftfahrzeug möglicherweise gleichzeitig befinden, falls ihre jeweiligen Geschwindigkeitsprofile nicht angepasst sind; und
Erzeugen eines angepassten Geschwindigkeitsprofils des Fahrzeugs in Betrieb und dessen angepassten Bewegungsbahn auf dem Streckenabschnitt, wobei die angepasste Bewegungsbahn den vorgenannten Punkt auf dem Streckenabschnitt nicht einschließt, und wobei das angepasste Geschwindigkeitsprofil des Fahrzeugs in Betrieb auf der Grundlage der angepassten Bewertung der Energieeffizienz des Fahrzeugs in Betrieb erzeugt wird.

4. System zum Erzeugen eines angepassten energieeffizienten Fahrwegs für ein Fahrzeug in Betrieb, wobei das System mindestens Folgendes umfasst:
eine CPU;
mehr als einen Umgebungssensor, der dazu ausgebildet ist, ein zweites Kraftfahrzeug zu erfassen, wobei die Umgebungssensoren eine beliebige Kombination aus einem Helligkeitssensor, einem Radar, einem LiDAR, einer Videokamera und einem Sonar umfassen;
und einen Speicher, der einen Programmcode speichert, der, wenn er von der CPU ausgeführt wird, die CPU dazu veranlasst, die Schritte gemäß dem Verfahren zum Erzeugen eines angepassten energieeffizienten Fahrwegs für das Fahrzeug in Betrieb gemäß einem der Ansprüche 1 bis 3 auszuführen.

5. System gemäß dem vorstehenden Anspruch, wobei es ferner einen Server umfasst, wobei der Server seinerseits zumindest die CPU umfasst.

6. Kraftfahrzeug, umfassend mindestens:
Antriebsvorrichtung;
einen Motor, der mit der Antriebsvorrichtung verbunden ist und diese antreibt; und
ein Kraftfahrzeugsteuersystem, das dazu ausgelegt ist, den Motor des Kraftfahrzeugs zu steuern, sowie das System nach einem der Ansprüche 4 bis 5:

7. Nichtflüchtiges, computerlesbares Medium, das einen Programmcode speichert, der, wenn er von einer CPU einer Computervorrichtung implementiert wird und bei Erkennen eines zweiten Kraftfahrzeugs durch mehr als einen Umgebungssensor, die CPU veranlasst, die Schritte gemäß dem Verfahren zum Erzeugen eines angepassten energieeffizienten Fahrwegs für ein Fahrzeug in Betrieb gemäß einem der Ansprüche 1 bis 3 auszuführen.

## Revendications

1. Procédé (100) destiné à générer une voie d'ajustement économe en énergie pour un véhicule en service, exécuté par l'unité centrale d'un dispositif informatique, le procédé comprenant au moins les étapes suivantes:
génération (201) d'une première voie économe en énergie pour le véhicule en service, ladite voie comprenant un profil de vitesse du véhicule en service et sa trajectoire sur une portion d'une route;
détection (202) d'un deuxième véhicule automobile situé sur la même portion de la route, le deuxième véhicule automobile étant détecté à l'aide des capteurs environnementaux du véhicule en service, et génération d'une voie pour le deuxième véhicule automobile, sur la base d'au moins son profil de vitesse estimé et de sa trajectoire estimée sur la portion de la route; et
génération (203) d'une voie d'ajustement économe en énergie pour le véhicule en service, ajustement de ladite première voie économe en énergie, sur la base d'un profil de vitesse ajusté, d'une évaluation de l'efficacité énergétique ajustée et d'une trajectoire ajustée du véhicule en service, ainsi que du profil de vitesse estimé et de la trajectoire estimée du deuxième véhicule automobile sur la portion de la route,
les capteurs environnementaux du véhicule en service comprenant toute combinaison d'un capteur de luminosité, d'un radar, d'un lidar, d'une caméra vidéo et d'un sonar, et
le procédé comprenant en outre les étapes suivantes
collection de données primaires, incluant
obtention de données relatives à un premier véhicule automobile, de données relatives à une portion de la route que doit parcourir le premier véhicule automobile, et de données relatives au véhicule en service, le véhicule en service parcourant la portion de la route après le premier véhicule automobile;
obtention de données relatives au deuxième véhicule automobile, le deuxième véhicule automobile parcourant la portion de la route après le premier véhicule automobile, mais avant le véhicule en service,
collection de données secondaires, incluant
génération d'une voie du premier véhicule automobile, ladite voie étant générée en se basant sur la façon dont le premier véhicule automobile a parcouru la portion de la route;
la première voie économe en énergie pour le véhicule en service étant générée sur la base de la voie générée pour le premier véhicule automobile;
la voie du premier véhicule automobile étant générée en exécutant les étapes suivantes:
génération d'un profil de vitesse du premier véhicule automobile sur la portion de la route parcourue;
évaluation de l'efficacité énergétique du premier véhicule automobile sur la portion de la route parcourue,
génération d'une voie économe en énergie pour le deuxième véhicule automobile, dans laquelle la voie économe en énergie pour le deuxième véhicule automobile est générée sur la base de la voie générée pour le premier véhicule automobile.

2. Procédé selon la revendication 1, **caractérisé en ce que** les données relatives au premier véhicule automobile comprennent au moins l'un des éléments suivants: le type et le modèle du premier véhicule automobile, sa masse, ses caractéristiques aérodynamiques, sa configuration de roues, sa consommation d'énergie estimée et/ou réelle, ainsi que les données provenant de ses capteurs d'accélération et/ou de vitesse, de ses capteurs de position, de ses capteurs de poids et de ses capteurs de vitesse de roue, et/ou une combinaison de ceux-ci; les données relatives au véhicule en service comprennent au moins l'un des éléments suivants: le type et le modèle du véhicule en service, sa masse, ses caractéristiques aérodynamiques, sa configuration de roues, sa consommation d'énergie estimée et/ou réelle et les données provenant de ses capteurs d'accélération et/ou de vitesse, les données provenant de ses capteurs de position, de ses capteurs de poids et de ses capteurs de vitesse de roue, et/ou une combinaison de ceux-ci; et les données relatives à la portion de la route que le premier véhicule automobile doit parcourir comprennent au moins l'une des données relatives à la portion de la route que le premier véhicule automobile doit parcourir, obtenues à partir de sources externes, et/ou une combinaison de celles-ci: la géométrie de la portion de la route, la pente de la portion de la route, la vitesse autorisée sur la portion de la route, la qualité du revêtement routier de la portion de la route, les limitations de vitesse sur la portion de la route, les virages sur la portion de la route, les conditions météorologiques sur la portion de la route, ou son infrastructure.

3. Procédé selon la revendication 1, **caractérisé en ce que** la voie d'ajustement économe en énergie pour le véhicule en service est générée au moyen de l'unité centrale du dispositif informatique mettant en œuvre le procédé de génération d'une voie d'ajustement économe en énergie pour le véhicule automobile, le procédé comprenant les étapes suivantes:
génération d'un profil de vitesse estimé du deuxième véhicule automobile et de sa trajectoire estimée sur la portion de la route;
détermination d'un point sur la portion de la route où le véhicule en service et le deuxième véhicule automobile pourraient se trouver simultanément si leurs profils de vitesse respectifs ne sont pas ajustés, et
génération d'un profil de vitesse ajusté du véhicule en service et de sa trajectoire ajustée sur la portion de la route, la trajectoire ajustée n'incluant pas le point susmentionné sur la portion de la route, et le profil de vitesse ajusté du véhicule en service étant généré sur la base de l'évaluation ajustée de l'efficacité énergétique du véhicule en service.

4. Système destiné à générer une voie d'ajustement économe en énergie pour un véhicule en service, comprenant au moins:
une unité centrale;
plus d'un capteur environnemental configuré pour détecter un deuxième véhicule automobile, les capteurs environnementaux comprenant toute combinaison d'un capteur de luminosité, d'un radar, d'un lidar, d'une caméra vidéo et d'un sonar;
et une mémoire qui stocke un code de programme qui, lorsqu'il est mis en œuvre par l'unité centrale, amène celle-ci à exécuter les étapes conformément au procédé destiné à générer une voie d'ajustement économe en énergie pour le véhicule en service selon l'une quelconque des revendications 1 à 3.

5. Système selon la revendication précédente, **caractérisé en ce qu'**il comprend en outre un serveur, ce serveur comprenant lui-même au moins l'unité centrale.

6. Véhicule automobile comprenant au moins:
un dispositif d'entraînement;
un moteur relié au dispositif d'entraînement et actionnant celui-ci, et
un système de commande du véhicule automobile adapté pour commander le moteur dudit véhicule automobile, et le système selon l'une quelconque des revendications 4 à 5.

7. Support lisible par ordinateur, non transitoire, sur lequel est stocké un code de programme qui, lorsqu'il est mis en œuvre par une unité centrale d'un dispositif informatique et lors de la détection d'un deuxième véhicule automobile par plusieurs capteurs environnementaux, amène l'unité centrale à exécuter les étapes conformément au procédé destiné à générer une voie d'ajustement économe en énergie pour un véhicule en service selon l'une quelconque des revendications 1 à 3.
